(19)

Europäisches Patentamt

European Patent Office

Office européen des brevets

(11)  **EP 4 516 754 A1**

(12)  **EUROPEAN PATENT APPLICATION**
published in accordance with Art. 153(4) EPC

(43) Date of publication:
**05.03.2025   Bulletin 2025/10**

(21) Application number: 23796205.5

(22) Date of filing: **19.04.2023**

(51) International Patent Classification (IPC):
*C03C 19/00* (2006.01)      *C03C 15/00* (2006.01)

(52) Cooperative Patent Classification (CPC):
**C03C 15/00; C03C 19/00**

(86) International application number:
**PCT/JP2023/015636**

(87) International publication number:
**WO 2023/210463 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **28.04.2022   JP 2022075351**

(71) Applicant: AGC INC.
**Chiyoda-ku,
Tokyo 1008405 (JP)**

(72) Inventors:
• **AKAMA, Yuki**
**Tokyo 100-8405 (JP)**
• **ISSHIKI, Masanobu**
**Tokyo 100-8405 (JP)**
• **MORI, Yusuke**
**Tokyo 100-8405 (JP)**

(74) Representative: **Müller-Boré & Partner
Patentanwälte PartG mbB
Friedenheimer Brücke 21
80639 München (DE)**

(54)  **GLASS SHEET AND METHOD FOR MANUFACTURING GLASS SHEET**

(57)  A glass plate includes a first principal surface and a second principal surface facing away from the first principal surface, and the first principal surface includes an anti-glare surface. The anti-glare surface includes a plurality of curvingly-recessed surfaces, each of which has a spoon-cut shape. Upon performing measurement of the surface shape of the anti-glare surface by a laser microscope and decomposition of the anti-glare surface into a plurality of curvingly-recessed surfaces by a watershed algorithm based on a measured result, the anti-glare surface satisfies (A) to (D) as follows. (A) A standard deviation $S_\sigma$ of an area $S$ of the curvingly-recessed surface in plan view is 32.5 $\mu m^2$ or less. (B) The number $N$ of the recessed surfaces per predetermined area in plan view is 250 surfaces/100 $\mu m \square$ or more. (C) An average value $H_{AVE}$ of a depth $H$ of the curvingly-recessed surface is 0.10 $\mu m$ or more. (D) A standard deviation $H_\sigma$ of the depth $H$ is 0.220 $\mu m$ or less, and the product $H_{AVE} \times H_\sigma$ of the average value $H_{AVE}$ of the depth $H$ and the standard deviation $H_\sigma$ is 0.085 $\mu m^2$ or less.

FIG.1

EP 4 516 754 A1

# EP 4 516 754 A1

**Description**

TECHNICAL FIELD

The present disclosure relates to a glass plate and a method of producing a glass plate.

BACKGROUND ART

A cover glass is provided on a surface of an image display device on which an image is displayed. When surrounding objects (including illumination) are reflected on the cover glass, visibility of the image deteriorates. Therefore, it has been studied to apply anti-glare treatment to the glass plate constituting the cover glass.

The anti-glare treatment is a process for imparting fine irregularities to a principal surface of the glass plate. Reflected light can be diffused by the irregularities, and reflection can be suppressed. The anti-glare treatment includes, for example, at least one process selected from frosting, etching, or blasting.

The anti-glare treatment of Patent Document 1 includes a process of blasting the principal surface of the glass plate by using a mixture of sand grains and water having a chord length of 0.5 $\mu$m to 2 $\mu$m, and a process of etching the principal surface of the glass plate thereafter.

The anti-glare treatment of Patent Document 2 includes a process of frosting the principal surface of the glass plate, and a process of etching the principal surface of the glass plate thereafter. In the frosting, for example, a mixed aqueous solution of ammonium fluoride or potassium fluoride and hydrogen fluoride is used.

The anti-glare treatment of Patent Document 3 includes a process of blasting the principal surface of the glass plate and a process of etching the principal surface of the glass plate thereafter. Particles having a number of #2000 or higher are used as the particles for the blasting.

The anti-glare treatment of Patent Document 4 includes a process of blasting the principal surface of the glass plate and a process of etching the principal surface of the glass plate thereafter. Particles having a number of #3000 or higher are used as the particles for the blasting.

RELATED ART DOCUMENTS

PATENT DOCUMENTS

Patent Document 1: Japanese Laid-Open Patent Application No. 2021-532056
Patent Document 2: International Publication No. WO2018/235808
Patent Document 3: International Publication No. WO2018/230079
Patent Document 4: International Publication No. WO2018/074494

SUMMARY OF THE INVENTION

PROBLEMS TO BE SOLVED BY THE INVENTION

While the anti-glare treatment suppresses reflection of surrounding objects, it causes a glare called "sparkle". The glare is caused by unevenness acting as fine lenses.

An embodiment of the present disclosure provides a technique for suppressing the reflection of surrounding objects and suppressing generation of the glare.

MEANS FOR SOLVING THE PROBLEMS

A glass plate according to one embodiment of the present disclosure includes a first principal surface and a second principal surface facing away from the first principal surface. The first principal surface includes an anti-glare surface. The anti-glare surface includes a plurality of curvingly-recessed surfaces, each of which has a spoon-cut shape. When a surface shape of the anti-glare surface is measured by a laser microscope and the anti-glare surface is decomposed into a plurality of curvingly-recessed surfaces by a watershed algorithm based on a measured result, the anti-glare surface satisfies (A) to (D) as follows. (A) A standard deviation $S_{\sigma}$ of an area S of the curvingly-recessed surface in plan view is 32.5 $\mu$m$^2$ or less. (B) The number N of the recessed surfaces per predetermined area in plan view is 250 surfaces/100 $\mu$m$\square$ or more. (C) An average value $H_{AVE}$ of a depth H of the curvingly-recessed surface is 0.10 $\mu$m or more. (D) A standard deviation $H_{\sigma}$ of the depth H is 0.220 $\mu$m or less, and the product $H_{AVE} \times H_{\sigma}$ of the average value $H_{AVE}$

2

of the depth H and the standard deviation $H_\sigma$ is 0.085 $\mu m^2$ or less.

ADVANTAGEOUS EFFECTS OF THE INVENTION

According to one embodiment of the present disclosure, reflection of surrounding objects can be suppressed and occurrence of glare can also be suppressed.

BRIEF DESCRIPTION OF THE DRAWINGS

[FIG. 1] FIG. 1(A) is a cross-sectional view illustrating a part of a glass plate according to one embodiment, and FIG. 1(B) is an enlarged cross-sectional view of the part of FIG. 1(A).
[FIG. 2] FIG. 2 is a diagram illustrating one example of a measurement device for measuring an anti-glare index value D.
[FIG. 3] FIG. 3 is a flowchart illustrating a method for producing a glass plate according to one embodiment.
[FIG. 4] FIG. 4 is a cross-sectional view illustrating one example of a curvingly-recessed surface formed from a microcrack.
[FIG. 5] FIG. 5 is a diagram illustrating a particle size distribution of particles used in Examples 1 to 10 and Examples 12 and 13 of Table 1.
[FIG. 6] FIG. 6 is images obtained by decomposing anti-glare surfaces obtained in Examples 1 to 4 of Table 1 into a plurality of curvingly-recessed surfaces by the watershed algorithm.
[FIG. 7] FIG. 7 is images obtained by decomposing the anti-glare surfaces obtained in Examples 5 to 8 of Table 1 into a plurality of curvingly-recessed surfaces by the watershed algorithm.
[FIG. 8] FIG. 8 is images obtained by decomposing the anti-glare surfaces obtained in Examples 9 to 11 of Table 1 into a plurality of curvingly-recessed surfaces by the watershed algorithm.
[FIG. 9] FIG. 9 is images obtained by decomposing the anti-glare surfaces obtained in Examples 12 and 13 of Table 1 into a plurality of curvingly-recessed surfaces by the watershed algorithm.

DETAILED DESCRIPTION OF THE INVENTION

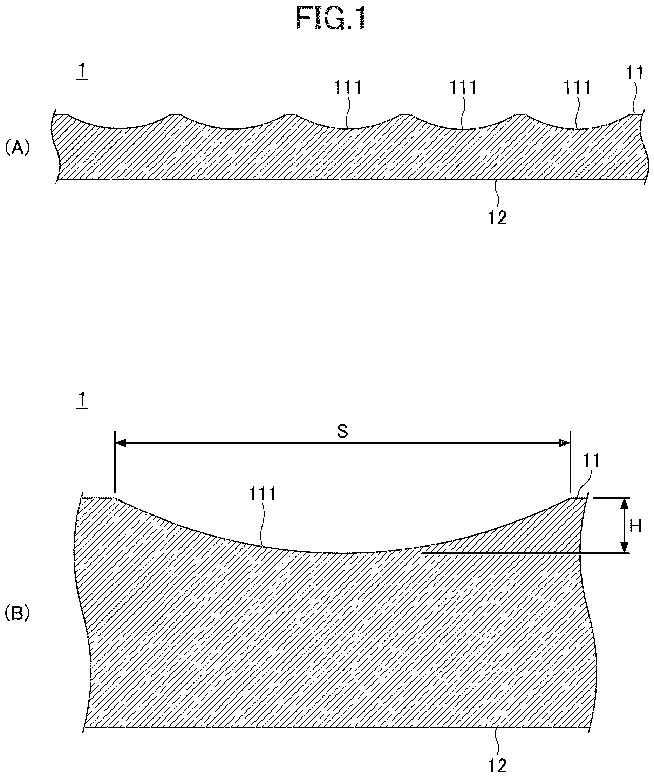

Hereinafter, embodiments for implementing the present disclosure will be described with reference to the drawings. The same or corresponding components in the respective drawings are denoted by the same reference numerals, and the description thereof may be omitted. In the specification, "to" indicating a numerical range means that the numerical values described as a starting value and an ending value of the numerical range are included in the range as a lower limit value and an upper limit value.
A glass plate 1 according to one embodiment will be described with reference to FIG. 1. The glass plate 1 includes the first principal surface 11 and the second principal surface 12 facing away from the first principal surface 11. The first principal surface 11 includes an anti-glare surface. The anti-glare surface suppresses reflection of surrounding objects (including illumination). The entire first principal surface 11 may be the anti-glare surface, or a part of the first principal surface 11 may be the anti-glare surface.
The glass plate 1 is used as a cover glass of an image display device. The image display device is incorporated into portable or fixed electronic equipment. The portable electronic equipment is, for example, a cellular phone, a smart phone, an electronic book reader, or a notebook personal computer. The fixed electronic equipment is, for example, a desktop personal computer, a digital signage, an in-vehicle display, a television, or an electronic blackboard (IFP).
The anti-glare surface includes a plurality of spoon-cut curvingly-recessed surfaces 111. The surface shape of the anti-glare surface is measured, for example, with a Keyence laser microscope VK-X260 using a 150$\times$ objective lens in a high-definition mode. Measured surface shape data is analyzed, for example, with image analysis software SPIP (registered trademark) version 5.1.11 manufactured by Image Metrology. Hereinafter, terms enclosed in " " in the description of the surface shape data analysis are the terms used in SPIP.
First, in order to eliminate an overall tilt, in a "Plane Correction dialog", "Average Profile Fit" is selected for "Global Correction" and "Bearing Height To Zero" is selected for "Z Offset Method", and a tilt correction is executed.
Next, parameters on a "Detection" tab in "Particle & Pore Analysis" are set as follows. "Detect Pores" is turned on by using "Watershed-Dispersed Features", "Plateau Range" is set to 0, "Number of Detail Levels" to 2, and "Merge Adjoining Shapes" to off. "Smoothing Filter Size" and "Finest Filter Size" are set as follows according to an arithmetic average height Sa measured separately. When the arithmetic average height Sa is equal to or more than 0.17 $\mu m$, the "Smoothing Filter Size" is set to 23 pixels (2.13 $\mu m$) and the "Finest Filter Size" is set to 11 pixels (1.02 $\mu m$). When the arithmetic average height Sa is less than 0.17 $\mu m$, the "Smoothing Filter Size" is set to 17 pixels (1.58 $\mu m$) and the "Finest

Filter Size" is set to 7 pixels (0.65 $\mu$m). "Slope Noise Reduction" is set to 10% and "Slope Image Threshold Percentile" is set to 0%.

Next, in a "particle and pore analysis", a "Post Processing" tab is set as follows: "Include Shapes on Border" to on, "Min" of "Z Range" to 0.03 $\mu$m, and "Min" of "Diameter" to 0.80 $\mu$m.

By executing the data analysis of the surface shape with the above settings, an "Area" value and "Z Range Output" are obtained. The "Area" value is used as the area S of the curvingly-recessed surface 111 in plan view. The plan view means a view from a direction perpendicular to the first principal surface 11 and the second principal surface 12. The "Z Range Output" is used as a depth H of the curvingly-recessed surface 111. The area S and the depth H are obtained for each curvingly-recessed surface 111.

When the surface shape of the anti-glare surface is measured by the laser microscope as described above, and the anti-glare surface is decomposed into a plurality of curvingly-recessed surfaces 111 by the watershed algorithm based on a measured result, the anti-glare surface preferably satisfies the following (A) to (D).

(A) The standard deviation $S_\sigma$ of the area S of the curvingly-recessed surface 111 in plan view is 32.5 $\mu$m$^2$ or less. In this specification, "$\mu$m$^2$" means square micrometer. The smaller the variation in the size of the curvingly-recessed surface 111, the more homogeneous the appearance of the anti-glare surface. When $S_\sigma$ is 32.5 $\mu$m$^2$ or less, the appearance of the anti-glare surface can be sufficiently homogenized and glare can be suppressed. $S_\sigma$ is more preferably 23.5 $\mu$m$^2$ or less. $S_\sigma$ is more preferably 14.5 $\mu$m$^2$ or less. $S_\sigma$ is 0.0 $\mu$m$^2$ or more. $S_\sigma$ is more preferably 3.0 $\mu$m$^2$ or more. $S_\sigma$ is furthermore preferably 5.0 $\mu$m$^2$ or more.

(B) The number N of curvingly-recessed surfaces 111 per predetermined area in plan view is 250 surfaces/100 $\mu$m$\square$ or more. N is detected in a square area having a side length of 100 $\mu$m in plan view. The greater the N, the shorter a distance between centers of the curvingly-recessed surfaces 111 and the more homogeneous an appearance of the anti-glare surface. When N is 250 surfaces/100 $\mu$m$\square$ or more, the appearance of the anti-glare surface can be sufficiently homogenized, and glare can be suppressed. N is more preferably 350 surfaces/100 $\mu$m$\square$ or more. N is more preferably 450 surfaces/100 $\mu$m$\square$ or more. N is preferably 1000 surfaces/100 $\mu$m$\square$ or less. N is more preferably 950 surfaces/100 $\mu$m$\square$ or less. N is furthermore preferably 900 surfaces/100 $\mu$m$\square$ or less.

(C) The average value $H_{AVE}$ of the depth H of the curvingly-recessed surface 111 is 0.10 $\mu$m or more. The depth H of the curvingly-recessed surface 111 is the depth from an edge of the curvingly-recessed surface 111. The edge of the curvingly-recessed surface 111 is obtained using the watershed algorithm. The greater the $H_{AVE}$, the more easily reflected light is diffused. When the $H_{AVE}$ is 0.10 $\mu$m or more, the reflection of surrounding objects can be suppressed. The $H_{AVE}$ is more preferably 0.17 $\mu$m or more. The $H_{AVE}$ is more preferably 0.24 $\mu$m or more. Also, the $H_{AVE}$ is preferably 0.50 $\mu$m or less, more preferably 0.47 $\mu$m or less, and still more preferably 0.44 $\mu$m or less.

(D) A standard deviation $H_\sigma$ of the depth H is 0.220 $\mu$m or less, and a product of the average value $H_{AVE}$ of the depth H and the standard deviation $H_\sigma$, $H_{AVE} \times H_\sigma$, is 0.085 $\mu$m$^2$ or less. The smaller the variation of the depth H, the more homogeneous the appearance of the anti-glare surface. When the $H_\sigma$ is 0.220 $\mu$m or less and $H_{AVE} \times H_\sigma$ is 0.085 $\mu$m$^2$ or less, the appearance of the anti-glare surface can be sufficiently homogenized, and glare can be suppressed. The $H_\sigma$ is more preferably 0.200 $\mu$m or less. The $H_\sigma$ is more preferably 0.180 $\mu$m or less. The $H_\sigma$ is 0.000 $\mu$m or more. The $H_\sigma$ is more preferably 0.025 $\mu$m or more. The $H_\sigma$ is more preferably 0.050 $\mu$m or more. $H_{AVE} \times H_\sigma$ is more preferably 0.080 $\mu$m$^2$ or less. $H_{AVE} \times H_\sigma$ is more preferably 0.070 $\mu$m$^2$ or less. $H_{AVE} \times H_\sigma$ is 0.000 $\mu$m$^2$ or more. $H_{AVE} \times H_\sigma$ is more preferably 0.003 $\mu$m$^2$ or more. $H_{AVE} \times H_\sigma$ is more preferably 0.005 $\mu$m$^2$ or more.

The anti-glare surface further preferably satisfies (E) in the following. (E) The average value $S_{AVE}$ of the area S of the curvingly-recessed surface 111 in plan view is 6 $\mu$m$^2$ or more and 33 $\mu$m$^2$ or less. When $S_{AVE}$ is 33 $\mu$m$^2$ or less, the appearance of the anti-glare surface can be more homogenized and the glare can be more suppressed. When $S_{AVE}$ is 6 $\mu$m$^2$ or more, the reflected light can be more diffused and the reflection of surrounding objects can be more suppressed. The $S_{AVE}$ is more preferably 6.5 $\mu$m$^2$ or more and 23 $\mu$m$^2$ or less. The $S_{AVE}$ is more preferably 7 $\mu$m$^2$ or more and 17 $\mu$m$^2$ or less.

A haze value of the anti-glare surface is preferably 50% or less. The haze value is measured with a commercially available measurement device. The measurement device and measuring conditions are as follows, for example. Measurement device: Suga Test Instruments Co., Ltd., haze meter HZ-V3. Measuring conditions: The measurement is performed using a C light source in accordance with the Japanese Industrial Standards (JIS K 7136: 2000).

The haze value is preferably 0% to 50%. When the haze value is 50% or less, clarity of a transmitted image is good. The haze value is more preferably 40% or less, more preferably 35% or less, furthermore preferably 30% or less, and more particularly preferably 25% or less.

A glare index value Sp of the anti-glare surface is preferably 4.6% or less. A method of measuring the glare index value Sp is concretely as follows. A pixel pattern attached to an SMS-1000 manufactured by D&MS is installed as a photomask on a light emitting surface of a backlight with its pattern surface facing up. Further, the glass plate 1 is installed on the pattern surface of the photomask with its first principal surface 11 facing up. By installing the photomask on the light emitting surface of the backlight whose light emitting color is green, a 190 dpi area of the pattern surface of the photomask is imaged through the glass plate 1 by a camera of the measurement device SMS-1000 manufactured by DM&S in a state of simulating a green monochromatic image display formed of RGB (0,255,0). A sparkle value obtained by image analysis of the measurement device is the glare index value Sp. Here, a measurement is performed in a difference image method (DIM) mode. A pixel ratio is adjusted to a height of 9.25, and the measurement is performed in a state of focusing on a pixel surface as much as possible. At this time, a distance between a light shielding plate attached to the camera and the glass plate 1 is about 262 mm. As the lens of the camera, a 23FM50SP lens having a focal distance of 50 mm is used at an aperture of 5.6.

The glare index value Sp is preferably 0.0% or more and 4.6% or less. When the glare index value Sp is 4.6% or less, occurrence of the glare can be suppressed. The glare index value Sp is more preferably 4.3% or less. The glare index value Sp is more preferably 4.0% or less.

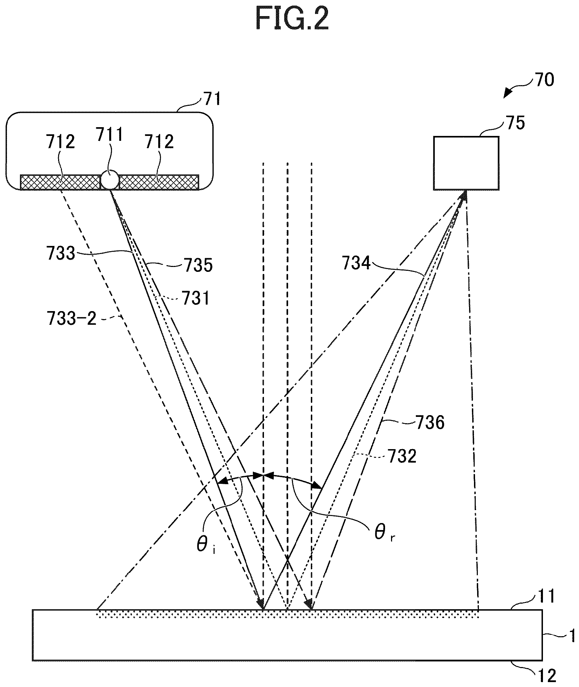

An anti-glare index value D of the anti-glare surface is preferably 0.10 or more. A method of measuring the anti-glare index value D will be described with reference to FIG. 2. As illustrated in FIG. 2, a measurement device 70 includes a linear light source device 71 and a surface luminance measurer 75. The linear light source device 71 includes a light source 711 and a black flat plate 712. The black flat plate 712 is arranged horizontally and has a rectangular (101 mm × 1 mm) slit in a vertical direction. The slit is provided with the light source 711. The light source 711 is a white light source of a cold cathode tube (CCFL). The glass plate 1 is arranged horizontally with its first principal surface 11 facing upward below the linear light source device 71 and the surface luminance measurer 75. The surface luminance measurer 75 is arranged on a plane perpendicular to the linear light source device 71 at a longitudinal center of the linear light source device 71. A focus of the surface luminance measurer 75 is aligned with an image of the linear light source device 71 reflected by the glass plate 1. That is, a plane on which the image is focused is aligned with the black flat plate 712. Among the rays incident from the linear light source device 71, reflected by the glass plate 1, and incident on the surface luminance measurer 75, rays 731 and 732 having a same incident angle θi and a same reflection angle θr are observed to be θi = θr = 5.7°.

The black flat plate is brought into contact with the second principal surface 12 of the glass plate 1. Therefore, the light detected by the surface luminance measurer 75 is the light reflected by the glass plate 1.

Scattering by the glass plate 1 is represented by a difference Δθ between the reflection angle θr and an incidence angle θi (Δθ = θr - θi). For example, focusing on rays 733 and 734 where Δθ = 0.5°, the ray 734 is scattered by the glass plate 1 in a direction 0.5° away from regular reflection. The ray 734 is observed by the surface luminance measurer 75 as an image of a portion where the black flat plate 712 and an imaginary ray 733-2 intersect. The incidence angle of the imaginary ray 733-2 is equal to a reflection angle of the ray 734.

When a surface luminance is obtained by the surface luminance measurer 75, the luminance of a portion illuminated by the ray 732 specularly reflected by the glass plate 1 becomes the highest, and an emission line appears at that portion. An image with a lower luminance is obtained as it becomes further away from the emission line toward both left and right sides. A luminance at a position away from the emission line becomes a luminance in accordance with the intensity of the ray scattered by the glass plate 1. Therefore, a luminance cross-sectional profile in a direction perpendicular to the emission line is extracted. In order to enhance measurement accuracy, data may be integrated in a direction parallel to the emission line.

Focusing on the rays 731 and 732, the incident angle θi and the reflection angle θr are equal, and Δθ = 0.0°. Since measurement data of luminance includes error, an average value of the luminance within a range of Δθ = 0.0° ± 0.1° is defined as D1.

Focusing on the rays 733 and 734, the reflection angle θr is greater than the incident angle θi, and Δθ = 0.5°. Since the measurement data of luminance includes error, an average value of luminance within a range of Δθ = 0.5° ± 0.1° is defined as D2.

Similarly, when focusing on rays 735 and 736, the reflection angle θr is smaller than the incident angle θi, and Δθ = -0.5°. Since the measurement data of luminance contains error, an average value of luminance within a range of Δθ = - 0.5° ± 0.1° is defined as D2.

The obtained D1, D2, and D3 are substituted into a following equation (1), and an anti-glare index value D is calculated.

$$D = (D2 + D3)/(2 \times D1) \cdots (1).$$

It has been confirmed that the anti-glare index value D indicates a good correlation with a result of determination of an anti-glare property performed by sight of an observer. For example, the smaller the anti-glare index value D (closer to zero), the poorer the anti-glare property. Conversely, the larger the anti-glare index value D (closer to 1), the better the anti-glare property.

The measurement of D1, D2, and D3 can be performed, for example, by using a device SMS-1000 manufactured by DM&S. When this device is used, a C1614A lens having a focal distance of a camera lens of 16 mm is used at an aperture of 5.6. A distance from the first principal surface 11 of the glass plate 1 to the camera lens is about 300 mm, and the Imaging Scale is set within a range of 0.0276 to 0.0278.

The anti-glare index value D is preferably 0.10 or more and less than 1.00. When the anti-glare index value D is 0.10 or more, reflection of surrounding objects can be suppressed. The anti-glare index value D is more preferably 0.12 or more. The anti-glare index value D is furthermore preferably 0.15 or more.

The glass plate 1 may be a flat plate or a curved plate. A thickness of the glass plate 1 is preferably 5 mm or less, and more preferably 3 mm or less. The thickness of the glass plate 1 is preferably 0.2 mm or more, and more preferably 0.3 mm or more.

The glass of the glass plate 1 is, for example, aluminosilicate glass, alkali aluminosilicate glass, soda lime glass, borosilicate glass, phosphorus silicate glass, alkali aluminoborosilicate glass, lead glass, alkali barium glass, or aluminoborosilicate glass. More specifically, the following glasses (i) to (v) are mentioned.

(i) The glass that contains 50% to 80% $SiO_2$, 0% to 26% $Al_2O_3$, 1% to 25% $Na_2O$, 0% to 10% $B_2O_3$, 0% to 20% $K_2O$, 0% to 20% MgO, and 0% to 15% CaO in mole percentage on an oxide basis.

(ii) A glass that contains 50% to 80% $SiO_2$, 2% to 25% $Al_2O_3$, 0% to 10% $Li_2O$, 0% to 18% $Na_2O$, 0% to 10% $K_2O$, 0% to 15% MgO, 0% to 5% CaO, and 0% to 5% $ZrO_2$ in mole percentage on an oxide basis.

(iii) A glass that contains 50% to 74% $SiO_2$, 1% to 10% $Al_2O_3$, 6% to 14% $Na_2O$, 3% to 11% $K_2O$, 2% to 15% MgO, 0% to 6% CaO, 0% to 5% $ZrO_2$ in mole percentage on an oxide basis, with a total $SiO_2$ and $Al2O_3$ content of 75% or less, a total $Na_2O$ and $K_2O$ content of 12% to 25%, and a total MgO and CaO content of 7% to 15%.

(iv) A glass that contains 68% to 80% $SiO_2$, 4% to 10% $Al_2O_3$, 5% to 15% $Na_2O$, 0% to 1% $K_2O$, 4% to 15% MgO, and 0% to 1% $ZrO_2$ in mole percent on an oxide basis.

(v) A glass that contains 67% to 75% $SiO_2$, 0% to 4% $Al_2O_3$, 7% to 15% $Na_2O$, 1% to 9% $K_2O$, 6% to 14% MgO, and 0% to 1.5% $ZrO_2$ in mole percent on an oxide basis, with a total $SiO_2$ and $Al_2O_3$ content of 71% to 75%, a total $Na_2O$ and $K_2O$ content of 12% to 20%, and a CaO content of less than 1%.

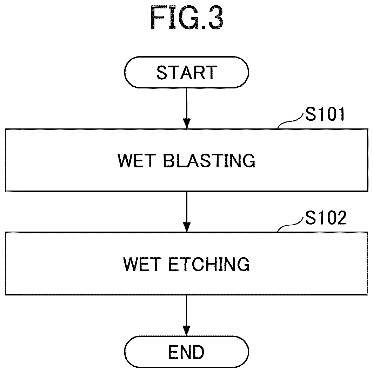

Referring to FIG. 3, a method of producing the glass plate 1 according to one embodiment will be described. The method of producing the glass plate 1 includes performing wet blasting (step S101) and wet etching (step S102) at least on a portion of the first principal surface 11 of the glass plate 1 in this order to obtain an anti-glare surface.

It should be noted that the method of producing the glass plate 1 may include processes other than steps S101 and S102. For example, after step S102, the glass plate 1 may be chemically strengthened. A chemically strengthening process is a process of forming a compressive stress layer on a glass surface by ion exchange at a temperature equal to or lower than a glass transition point. The compressive stress layer is formed by exchanging alkali metal ions having a small ionic radius contained in the glass with alkali ions having a larger ionic radius.

Step S101 includes performing wet blasting at least on a portion of the first principal surface 11 of the glass plate 1. The wet blasting is a process of forming minute cracks (microcracks) in an object by jetting a slurry containing particles from a nozzle under pressure of a gas and impinging on the object.

The slurry includes particles described in the following and a dispersion medium. Examples of the dispersion medium include water, a water-soluble organic solvent, or a mixture of water and a water-soluble organic solvent. Examples of the water-soluble organic solvent include lower alcohols and ketones. Examples of the lower alcohols include methanol, ethanol, n-propanol, isopropanol, n-butanol, sec-butanol, or tert-butanol. One example of the ketones is acetone.

The slurry may also contain a dispersion aid. Examples of the dispersion aid include carboxymethyl cellulose, a polyacrylic acid derivative or a salt thereof, a polycarboxylic acid derivative or a salt thereof, or polyureurethane. Examples of the polyacrylic acid derivative or the salt thereof include polyacrylic acid, a polyacrylic acid ammonium salt, a polyacrylic acid sodium salt, a polyacrylamide, an acrylic ester-acrylate copolymer, an acrylamide-acrylate copolymer, or a copolymer of an acrylic ester acrylamide-acrylate salt. Examples of the polycarboxylic acid derivative or a salt thereof include a polycarboxylic acid ammonium salt or a polycarboxylic acid sodium salt. A ratio of the dispersion aid in the slurry is preferably 0.03 mass% or more and 2.0 mass% or less.

The particles contained in the slurry are preferably particles having higher Mohs hardness than glass from a viewpoint of processability, and are preferably inorganic particles other than spherical particles. The inorganic particles may be made of a metal (containing alloys) or an inorganic compound. The inorganic compound may be a metal compound or a non-metal compound. Examples of the metal include stainless steel, zinc, copper, and the like. Examples of the inorganic compound include silica, glass, garnet, zirconia, alumina, silicon carbide, boron carbide, $CO_2$ (dry ice), and the like. Among these, alumina is preferable. As the particles contained in the slurry, a commercial product can be used. Examples of the commercial product include white alumina manufactured by Fujimi Incorporated.

The concentration of the particles in the slurry is preferably 0.05 mass% or higher from the viewpoint of productivity, and more preferably 0.1 mass% or higher. On the other hand, the concentration of the particles in the slurry

EP 4 516 754 A1

is preferably 30 mass% or lower, and more preferably 10 mass% or lower from a viewpoint of fluidity of the slurry.

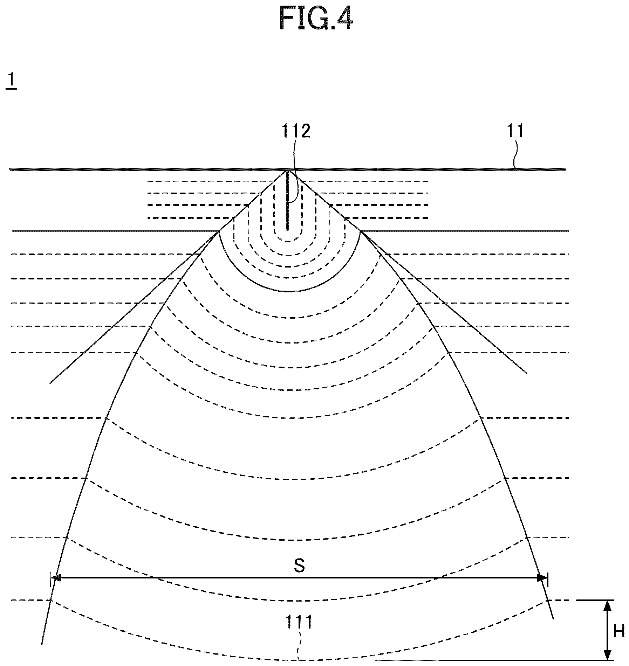

The wet blasting can use particles having a smaller particle diameter d than dry blasting, and can form a large number of microcracks (microcracks). Then, in step S102 described in the following, the glass is etched isotropically starting from the microcrack 112 as illustrated in FIG. 4, so that the curvingly-recessed surface 111 can be formed. In FIG. 4, a plurality of broken lines indicate changes in the surface shape of the glass with time. When the glass is etched isotropically, the depth H of the curvingly-recessed surface 111 is equivalent to a depth of the microcrack 112.

The depth of the microcrack 112 varies depending on the particle diameter d of the particles. The smaller the particle diameter d of the particles, the smaller the impact of the particles and the smaller the depth of the microcrack 112. The smaller the depth of the microcrack 112, the smaller the area S of the curvingly-recessed surface 111 in plan view. The smaller the depth of the microcrack 112, the smaller the depth H of the curvingly-recessed surface 111.

The particles contained in the slurry preferably have an average value $d_{AVE}$ of the particle diameter d (hereinafter, also referred to as average particle diameter $d_{AVE}$) of 2.00 $\mu$m or more. When the average particle diameter $d_{AVE}$ is 2.00 $\mu$m or more, (C) an anti-glare surface having an average value $H_{AVE}$ of the depth H of the curvingly-recessed surface 111, of 0.10 $\mu$m or more is obtained. When the average particle diameter $d_{AVE}$ is 2.00 $\mu$m or more, a length of processing time of the microcrack 112 can be shortened and processability of the microcrack 112 can be enhanced. The average particle diameter $d_{AVE}$ is more preferably 2.05 $\mu$m or more. The average particle diameter $d_{AVE}$ is furthermore preferably 2.10 $\mu$m or more.

The particles contained in the slurry preferably have the average particle diameter $d_{AVE}$ of 4.50 $\mu$m or smaller. When the average particle diameter $d_{AVE}$ is 4.50 $\mu$m or smaller, an antiglare surface in which the average depth of the microcracks 112 is small and the average value $S_{AVE}$ of (E) the area S is 6 $\mu$m$^2$ or more and 33 $\mu$m$^2$ or lower, can be obtained. The average particle diameter $d_{AVE}$ is more preferably 4.00 $\mu$m or smaller. The average particle diameter $d_{AVE}$ is furthermore preferably 3.50 $\mu$m or smaller. The average particle diameter $d_{AVE}$ is still more preferably 3.00 $\mu$m or smaller.

The particles contained in the slurry preferably have a coefficient of variation $d_{CV}$ (coefficient of variation $d_{CV}$ = standard deviation $d_{\sigma}$/average value $d_{AVE}$) of particle diameter d of 0.400 or smaller. When the coefficient of variation $d_{CV}$ is 0.400 or smaller, the depth of the microcracks 112 can be made uniform. Thus, (D) an anti-glare surface in which the standard deviation $H_{\sigma}$ of the depth H is 0.220 $\mu$m or less and a product $H_{AVE} \times H_{\sigma}$ of the average value $H_{AVE}$ of the depth H and the standard deviation $H_{\sigma}$ is 0.085 $\mu$m$^2$ or smaller is obtained. Further, by making the depth of the microcracks 112 uniform, the area S of the curvingly-recessed surface 111 in plan view is also made uniform, and (A) an anti-glare surface in which the standard deviation $S_{\sigma}$ of the area S of the curvingly-recessed surface 111 in plan view is 32.5 $\mu$m$^2$ or smaller is obtained. Further, a proportion of the microcracks 112 whose depth does not reach a specified value is decreased, the proportion of the microcracks 112 whose depth is at least the specified value is increased, and (C) an anti-glare surface in which the average value $H_{AVE}$ of the depth H of the curvingly-recessed surface 111 is 0.10 $\mu$m or more is obtained. The coefficient of variation $d_{CV}$ is more preferably 0.360 or less, further more preferably 0.320 or less, and particularly preferably 0.250 or less. The coefficient of variation $d_{CV}$ is preferably equal to or more than 0.030, and more preferably equal to or more than 0.060 from the viewpoint of workability of the classification work.

When the coefficient of variation $d_{CV}$ is equal to or less than 0.250, the depth of the microcracks 112 can be made uniform. Thus, an anti-glare surface in which (Da) the standard deviation $H_{\sigma}$ of the depth H is equal to or less than 0.180 $\mu$m, and the product $H_{AVE} \times H_{\sigma}$ of the average value $H_{AVE}$ of the depth H and the standard deviation $H_{\sigma}$ is equal to or less than 0.070 $\mu$m$^2$ is obtained. Further, by making the depth of the microcracks 112 uniform, the area S of the curvingly-recessed surface 111 in plan view is also made uniform, and (Aa) an anti-glare surface in which (a) the standard deviation $S_{\sigma}$ of the area S of the curvingly-recessed surface 111 in plan view is equal to or less than 14.5 $\mu$m$^2$ is obtained. Further, the proportion of the microcracks 112 whose depth does not reach the specified value is decreased, the proportion of the microcracks 112 whose depth is equal to or more than the specified value is increased, and (C) an anti-glare surface in which the average value $H_{AVE}$ of the depth H of the curvingly-recessed surface 111 is equal to or more than 0.10 $\mu$m is obtained.

Particles are pre-classified so that the coefficient of variation $d_{CV}$ is equal to or less than 0.400, and more preferably equal to or less than 0.250. A method of classification is not particularly limited, but examples include classification by sieving, gravity classification (horizontal flow, vertical upward flow), inertial force field classification (linear, curved, and graded), centrifugal force field classification (free vortex type vortex flow and forced vortex flow), and the like.

The particle size distribution of the particles contained in the slurry is measured using, for example, an electric resistance type particle size distribution measurement device Multisizer 4e manufactured by Beckman Coulter, Inc. The particle size distribution obtained using the particle size distribution measurement device described above is based on a so-called "Coulter principle", in which an impedance change due to passage of each particle in an electrolyte solution through a measurement site is directly detected, the particle size of each particle is measured as a spherical equivalent particle size, and particle distribution is arranged in an integrated histogram (or an integrated frequency curve) with the particle size as a horizontal axis and the number (frequency) as a vertical axis. The average particle diameter $d_{AVE}$ is calculated as a so-called arithmetic average diameter, according to the number distribution.

The number of microcracks 112 per unit area can be adjusted by a scanning speed or number of scans of a nozzle. The number of scans is the number of times the ray of the nozzle passes the same place on a glass surface. The number of microcracks 112 per unit area can be adjusted so as to obtain an anti-glare surface in which (B) the number N of curvingly-recessed surfaces 111 per predetermined area is 250 surfaces/100 $\mu$m$\square$ or more in plan view.

The depth of the microcracks 112 can be adjusted not only by a material of the particles and the particle diameter d of the particles but also by an injection pressure or a projection distance. The injection pressure (gas pressure) is preferably 0.10 MPa to 2.00 MPa, and more preferably 0.15 MPa to 0.50 MPa. A projection distance (a distance between the nozzle and the glass plate) is preferably 10 mm to 50 mm, and more preferably 20 mm to 40 mm.

Step S102 includes performing wet etching on at least a portion of the first principal surface 11 of the glass plate 1. The wet etching is a process in which an etchant containing an acid or an alkali is supplied to the first principal surface 11 of the glass plate 1 to form a curvingly-recessed surface 111 starting from the microcrack 112. A method of supplying the etchant may be a dip method in which the glass plate is immersed in the etchant, or a spray method in which the etchant is applied to the glass plate. The wet etching enables isotropic etching of glass as compared with dry etching.

The etchant is, for example, a solution containing an acid. An acid concentration in the etchant is preferably 1 to 15 mass%, and particularly preferably 3 to 10 mass%. As the acid, for example, hydrogen fluoride is used. A combination of hydrogen fluoride and hydrogen chloride may be used.

When the etchant is a solution containing acid, etching is preferably performed at a temperature of 10°C to 40°C, preferably 15°C to 35°C, for 2 to 20 minutes.

When the etchant is a solution containing acid, an etching rate is preferably 0.5 $\mu$m/minute or more, more preferably 1.0 $\mu$m/minute or more, and still more preferably 2.0 $\mu$m/minute or more, from the viewpoint of sufficiently securing an anti-glare effect. The etching rate is preferably 20 $\mu$m/minute or less.

The etchant may be a solution containing alkali. An alkali concentration in the etchant is preferably 1 mass% to 50 mass%, and preferably 3 mass% to 50 mass%. As the alkali, at least one base selected from, for example, sodium hydroxide, potassium hydroxide, potassium carbonate, or sodium carbonate is used. These bases may be used alone or in combination.

The etchant preferably contains a chelating agent in addition to the alkali. The chelating agent suppresses recrystallization of the glass by forming a chelating complex with a metal ion of the glass dissolved in the etchant. A content of the chelating agent in the etchant is preferably from 0.1 mol/L to 0.5 mol/L. As the chelating agent, for example, ethylenediaminetetraacetic acid (EDTA), citric acid, gluconic acid, succinic acid, oxalic acid, tartaric acid, or hydroxyethylidenediphosphinic acid (HEDP) is used.

When the etchant is a solution containing an alkali, etching is preferably performed at a temperature of from 65°C to 150°C, preferably from 80°C to 150°C, for 20 minutes to 40 hours.

When the etchant is a solution containing an alkali, the etching rate is preferably at least 0.05 um/minute, more preferably at least 0.10 um/minute, and still more preferably at least 0.15 um/minute from the viewpoint of sufficiently securing the anti-glare effect. The etching rate is preferably 1.50 $\mu$m/min or less.

EXAMPLES

Experimental data will be described in the following. Examples 1 to 10 below are working examples, and Examples 11 to 13 below are comparative examples.

[Example 1]

In Example 1, anti-glare glass was prepared by subjecting the first principal surface of a glass plate to wet blasting, wet etching, and a chemical strengthening treatment in this order. As the glass plate, a product name: Dragontrail (registered trademark) manufactured by AGC Inc. was prepared. The size of the glass plate was 100 mm × 100 mm, and the thickness was 1.0 mm.

In the wet blasting, a wet blasting device (manufactured by MACOHO Co., Ltd., device name: Jr.Type II) was used. The slurry was prepared by mixing ceramic particles, a dispersion aid, and water as a dispersion medium. The content of ceramic particles (slurry concentration) in the whole slurry was 1.1 wt%. The ceramic particles were prepared by classifying white alumina (particle size #4000) manufactured by Fujimi Incorporated. Regarding the particle diameter d of the ceramic particles, the average particle diameter $d_{AVE}$ was 2.64 $\mu$m, and the coefficient of variation $d_{CV}$ was 0.148. The injection pressure (gas pressure) of the slurry was 0.25 MPa, the projection distance (distance between the nozzle and the glass plate) was 30 mm, the scanning speed of the nozzle was 200 mm/sec, and the number of nozzle scans was 20. The slurry was injected together with compressed air. In Example 1, the gas pressure means a pressure of the compressed air. After the wet blasting and before the wet etching, pure water washing and drying were performed.

In the wet etching, the glass plate was immersed in an etchant at 25°C for 286 seconds to etch the first principal surface of the glass plate by 15.9 $\mu$m. The second principal surface of the glass plate was protected by an acid-resistant protective film which was pasted in advance. The etchant was an aqueous solution containing 5 mass% hydrogen fluoride and 5 mass% hydrogen chloride. After the wet etching, the protective film was peeled off before the chemical strengthening process.

In the chemical strengthening process, the glass plate was immersed in a molten salt of potassium nitrate heated at 450°C for 1 hour. Then, the glass plate was pulled out of the molten salt and slowly cooled to room temperature in 1 hour. As a result, a compressive stress layer was formed on both the first and second principal surfaces of the glass plate.

[Example 2]

In Example 2, anti-glare glass was prepared under the same conditions as in Example 1 except that ceramic particles (classified white alumina (particle size #6000) manufactured by Fujimi Incorporated) having the average particle diameter $d_{AVE}$ of 2.22 $\mu$m and the coefficient of variation $d_{CV}$ of 0.119 were used in the wet blasting, and that the first principal surface of the glass plate was etched by 13.6 $\mu$m by immersing the glass plate in the etchant at 25°C for 240 seconds in the wet etching.

[Example 3]

In Example 3, anti-glare glass was prepared under the same conditions as in Example 1 except that the first principal surface of the glass plate was etched by 23.4 $\mu$m by immersing the glass plate in the etchant at 25°C for 436 seconds in the wet etching.

[Example 4]

In Example 4, anti-glare glass was prepared under the same conditions as in Example 1 except that ceramic particles (classified white alumina (particle size #6000) manufactured by Fujimi Incorporated) having the average particle diameter $d_{AVE}$ of 2.22 $\mu$m and the coefficient of variation $d_{CV}$ of 0.119 were used in the wet blasting, and that the first principal surface of the glass plate was etched by 20.6 $\mu$m by immersing the glass plate in the etchant at 25°C for 360 seconds in the wet etching.

[Example 5]

In Example 5, anti-glare glass was prepared under the same conditions as in Example 1 except that ceramic particles (classified white alumina (particle size #4000) manufactured by Fujimi Incorporated) having the average particle diameter $d_{AVE}$ of 3.04 $\mu$m and the coefficient of variation $d_{CV}$ of 0.107 were used in the wet blasting, the slurry concentration was 0.2 wt%, the number of nozzle scans was 25, and the first principal surface of the glass plate was etched by 20.8 $\mu$m by immersing the glass plate in the etchant at 25°C for 360 seconds in the wet etching.

[Example 6]

In Example 6, anti-glare glass was prepared under the same conditions as in Example 5 except that the first principal surface of the glass plate was etched by 27.2 $\mu$m by immersing the glass plate in the etchant at 25°C for 480 seconds in the wet etching.

[Example 7]

In Example 7, anti-glare glass was prepared under the same conditions as in Example 5 except that the slurry concentration was 1.1 wt%, the number of nozzle scans was 20, and the first principal surface of the glass plate was etched by 19.7 $\mu$m by immersing the glass plate in the etchant at 25°C for 360 seconds in the wet etching.

[Example 8]

In Example 8, anti-glare glass was prepared under the same conditions as in Example 7 except that the first principal surface of the glass plate was etched by 25.3 $\mu$m by immersing the glass plate in the etchant at 25°C for 480 seconds in the wet etching.

[Example 9]

In Example 9, anti-glare glass was prepared under the same conditions as in Example 1 except that ceramic particles (not-classified white alumina (particle size #4000) manufactured by Fujimi Incorporated) having the average particle diameter $d_{AVE}$ of 3.01 $\mu$m and the coefficient of variation $d_{CV}$ of 0.262 were used in the wet blasting, the slurry concentration was 0.2 wt%, and the first principal surface of the glass plate was etched by 26.3 $\mu$m by immersing the glass plate in the etchant at 25°C for 480 seconds in the wet etching.

[Example 10]

In Example 10, anti-glare glass was prepared under the same conditions as in Example 1 except that ceramic particles (not-classified white alumina (particle size #6000) manufactured by Fujimi Incorporated) having the average particle diameter $d_{AVE}$ of 2.06 $\mu$m and the coefficient of variation $d_{CV}$ of 0.315 were used in the wet blasting, and the first principal surface of the glass plate was etched by 24.9 $\mu$m by immersing the glass plate in the etchant at 25°C for 480 seconds in the wet etching.

[Example 11]

In Example 11, anti-glare glass was prepared by applying frosting, wet etching, and a chemical strengthening process to the first principal surface of the glass plate in this order. As the glass plate, a product name: Dragontrail (registered trademark) manufactured by AGC Inc. was prepared. The size of the glass plate was 100 mm × 100 mm and the thickness was 1.0 mm.

In the frosting, the glass plate was immersed in a chemical solution at 25°C for 3 minutes. The second principal surface of the glass plate was protected with the acid-resistant protective film which was pasted in advance. The chemical solution was an aqueous solution containing 8 wt% hydrogen fluoride and 8 wt% potassium fluoride. After the frosting, pure water cleaning and drying were performed before the wet etching.

In the wet etching, the glass plate was immersed in the etchant at 25°C for 3 minutes. The second principal surface of the glass plate was protected with the acid-resistant protective film. The etchant was an aqueous solution containing 10 wt% hydrogen fluoride. After the wet etching, the protective film was peeled off before the chemical strengthening process.

In the chemical strengthening process, the glass plate was immersed in a molten salt of potassium nitrate heated to 450°C for 1 hour. Then, the glass plate was pulled out of the molten salt and slowly cooled to room temperature for 1 hour. As a result, a compressive stress layer was formed on both the first and second principal surfaces of the glass plate.

[Example 12]

In Example 12, anti-glare glass was prepared under the same conditions as in Example 1 except that ceramic particles (MACOHO beads (product number: AX-3-15) manufactured by MACOHO Co., Ltd.) having the average particle diameter $d_{AVE}$ of 4.74 $\mu$m and the coefficient of variation $d_{CV}$ of 0.483 were used in the wet blasting, and the first principal surface of the glass plate was etched by 20.3 $\mu$m by immersing the glass plate in the etchant at 25°C for 360 seconds in the wet etching.

[Example 13]

In Example 13, anti-glare glass was prepared under the same conditions as in Example 12 except that the first principal surface of the glass plate was etched by 27.2 $\mu$m by immersing the glass plate in the etchant at 25°C for 480 seconds in the wet etching.

[Summary]

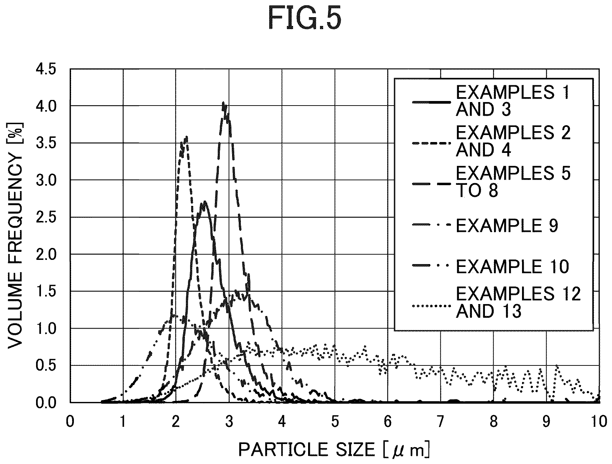

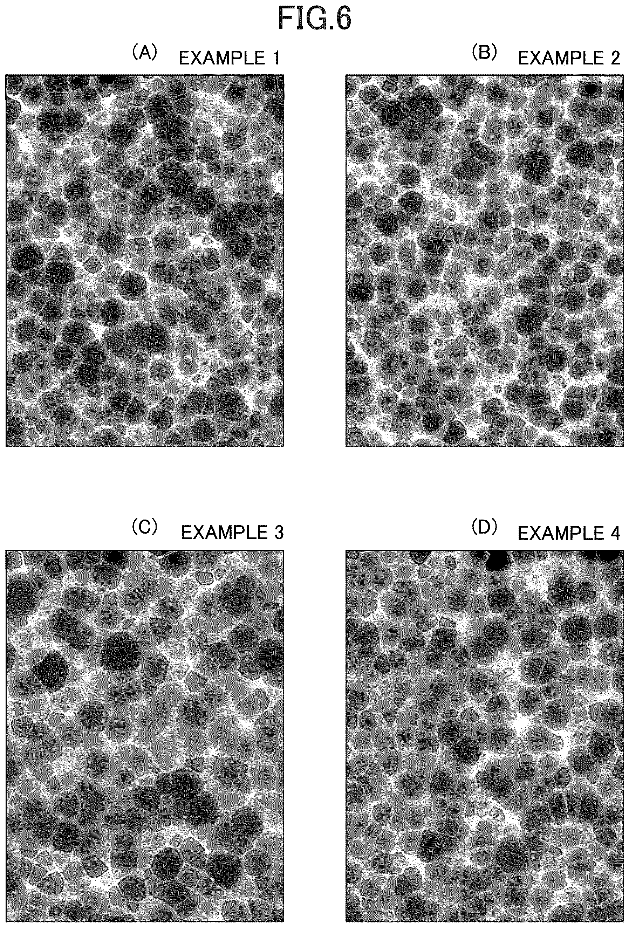

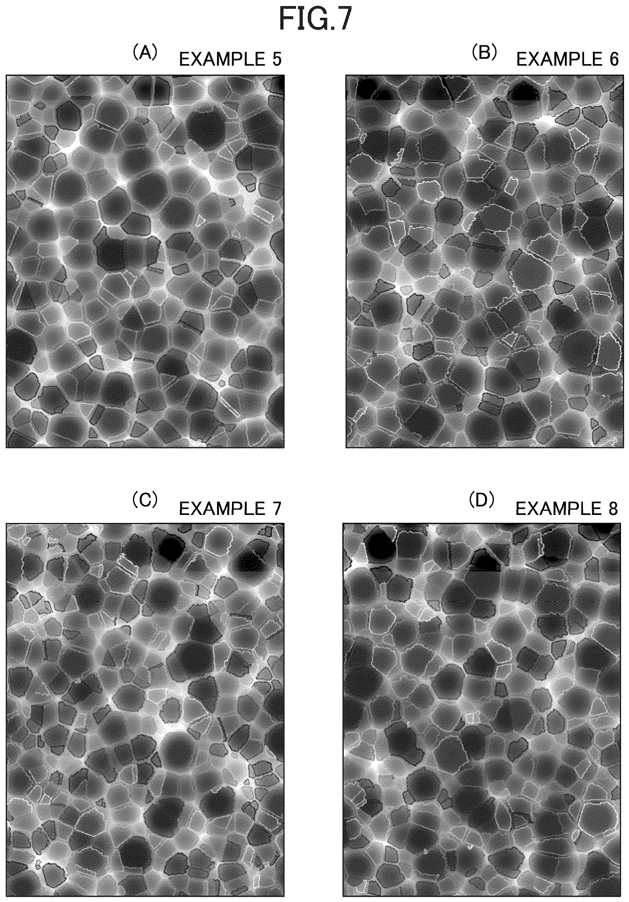

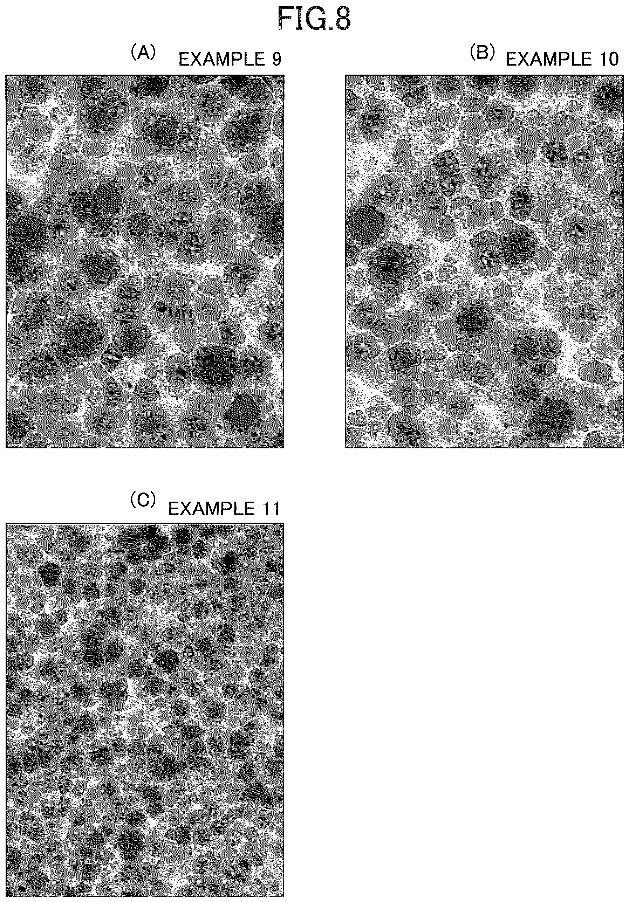

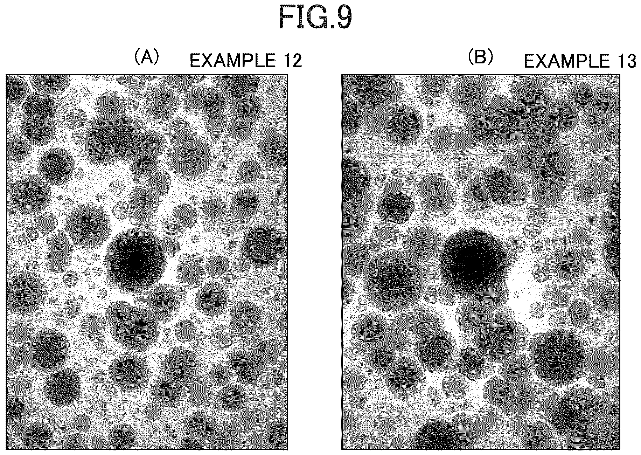

The processing conditions and processing results of Examples 1 to 13 are summarized in Table 1. The particle size distribution of alumina particles used in the wet blasting of Examples 1 to 10 and Examples 12 and 13 is illustrated in FIG. 5. Furthermore, the surface shapes of the anti-glare surfaces of Examples 1 to 13 were measured with a laser microscope VK-X260 manufactured by KEYENCE CORPORATION, and the results of analysis with image analysis software SPIP (registered trademark) version 5.1.11 manufactured by Image Metrology A/S are as illustrated in FIGS. 6 to 9. The images as illustrated in FIGS. 6 to 9 are images of rectangular areas (length of a long side: 94.9 $\mu$m, length of a short side: 71.2 $\mu$m). In FIGS. 6 to 9, the surface shape (height difference) of the anti-glare surfaces is illustrated in gray scale. In FIGS. 6 to 9, the lower the luminance, the lower the height.

[Table 1]

| | | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | EXAMPLE 11 | EXAMPLE 12 | EXAMPLE 13 |
|---|---|---|---|---|---|---|---|---|---|---|---|---|---|---|
| WET BLASTING | $d_{AVE}$ [μm] | 2.64 | 2.22 | 2.64 | 2.22 | 3.04 | 304 | 3.04 | 3.04 | 3.01 | 2.06 | - | 4.74 | 4.74 |
| | $d_{\sigma}$ [μm] | 0.39 | 0.26 | 0.39 | 0.26 | 0.33 | 0.33 | 0.33 | 0.33 | 0.79 | 0.65 | - | 2.29 | 2.29 |
| | $d_{CV}(d_{\sigma}/d_{AVE})$ | 0.148 | 0.119 | 0.148 | 0.119 | 0.107 | 0.107 | 0.107 | 0.107 | 0.262 | 0.315 | - | 0.483 | 0.483 |
| | SLURRY CONCENTRATION [wt%] | 1.1 | 1.1 | 1.1 | 1.1 | 0.2 | 0.2 | 1.1 | 1.1 | 0.2 | 1.1 | - | 1.1 | 1.1 |
| | INJECTION PRESSURE [MPa] | 0.25 | 0.25 | 0.25 | 0.25 | 0.25 | 0.25 | 0.25 | 0.25 | 0.25 | 0.25 | - | 0.25 | 0.25 |
| | PROJECTION DISTANCE [mm] | 30 | 30 | 30 | 30 | 30 | 30 | 30 | 30 | 30 | 30 | - | 30 | 30 |
| | NUMBER OF SCANS | 20 | 20 | 20 | 20 | 25 | 25 | 20 | 20 | 20 | 20 | - | 20 | 20 |
| WET ETCHING | ETCHING TIME LENGTH [sec.] | 286 | 240 | 436 | 360 | 360 | 480 | 360 | 480 | 480 | 480 | - | 360 | 480 |
| | ETCHING AMOUNT [μm] | 15.9 | 13.6 | 23.4 | 20.6 | 20.8 | 27.2 | 19.7 | 25.3 | 26.3 | 24.9 | - | 20.3 | 27.2 |
| SURFACE SHAPE | $S_{AVE}$ [μm²] | 9.0 | 7.6 | 12.2 | 9.8 | 15.1 | 15.1 | 11.3 | 14.5 | 17.8 | 7.7 | 5.3 | 11.1 | 17.7 |
| | $S_{\sigma}$ [μm²] | 8.0 | 6.4 | 11.9 | 8.7 | 13.4 | 13.6 | 10.8 | 13.3 | 17.5 | 14.6 | 4.6 | 18.3 | 24.4 |
| | N [SURFACES/100 μm□] | 783 | 883 | 593 | 705 | 479 | 491 | 638 | 501 | 412 | 553 | 1214 | 519 | 371 |
| | $H_{AVE}$ [μm] | 0.28 | 0.27 | 0.26 | 0.25 | 0.37 | 0.33 | 0.31 | 0.30 | 0.37 | 0.27 | 0.09 | 0.21 | 0.28 |
| | $H_{\sigma}$ [μm] | 0,141 | 0.130 | 0.131 | 0.128 | 0.170 | 0.155 | 0.156 | 0.146 | 0.193 | 0.155 | 0.044 | 0.221 | 0.231 |
| | $H_{AVE} \times H_{\sigma}$ [μm²] | 0.039 | 0.036 | 0.034 | 0.032 | 0.064 | 0.052 | 0.049 | 0.044 | 0.072 | 0.042 | 0.004 | 0.046 | 0.066 |
| OPTICAL CHARACTERISTICS | HAZE VALUE [%] | 29.5 | 32.2 | 20.4 | 21.5 | 33.0 | 26.2 | 28.8 | 21.8 | 30.9 | 22.0 | 5.2 | 29.1 | 25.4 |
| | GLARE INDEX VALUE Sp [%] | 3.14 | 278 | 347 | 3.03 | 3.35 | 3.71 | 3.38 | 3.63 | 4.17 | 4.14 | 1.56 | 4.88 | 5.09 |
| | ANTI-GLARE INDEX VALUE D [-] | 0.18 | 0.15 | 0.15 | 0.12 | 0.45 | 0.40 | 0.26 | 0.23 | 0.55 | 0.22 | 0.03 | 0.22 | 0.31 |

EP 4 516 754 A1

# EP 4 516 754 A1

As summarized in Table 1, in Examples 1 to 10, unlike Examples 12 and 13, wet blasting using a slurry containing particles having the average particle diameter $d_{AVE}$ of 2.00 $\mu$m or more and the coefficient of variation $d_{CV}$ of 0.400 or less, and wet etching were performed in this order. As illustrated in FIG. 5, in Examples 1 to 10, variations in the particle size of alumina particles were smaller than those in Examples 12 and 13. In Example 11, wet blasting was not performed.

As a result, unlike in Examples 11 to 13, the antiglare surfaces of Examples 1 to 10 had (A) $S_{\sigma}$ of 32.5 $\mu$m$^2$ or less, (B) N of 250 surfaces/100 $\mu$m$\square$ or more, (C) $H_{AVE}$ of 0.10 $\mu$m or more, and (D) $H_{\sigma}$ of 0.220 $\mu$m or less and $H_{AVE} \times H_{\sigma}$ of 0.085 $\mu$m$^2$ or less. Therefore, unlike in Examples 11 to 13, the antiglare surfaces of Examples 1 to 10 had the glare index value Sp of 4.6% or less and the anti-glare index value D of 0.10 or more.

As summarized in Table 1, in Examples 1 to 8, unlike Examples 9 and 10, wet blasting using the slurry containing particles having the average particle diameter $d_{AVE}$ of 2.00 $\mu$m or more and the coefficient of variation $d_{CV}$ of 0.250 or less, and wet etching were performed in this order. As illustrated in FIG. 5, in Examples 1 to 8, the dispersion of the particle size of the alumina particles was smaller than that in Examples 9 and 10.

As a result, the antiglare surfaces of Examples 1 to 8 differed from the antiglare surfaces of Examples 9 and 10 in that (Aa) $S_{\sigma}$ was 14.5 $\mu$m$^2$ or less, (Ba) N was 450 surfaces/100 $\mu$m$\square$ or more, (C) $H_{AVE}$ was 0.10 $\mu$m or more, (Da) $H_{\sigma}$ was 0.180 $\mu$m or less, and $H_{AVE} \times H_{\sigma}$ was 0.070 $\mu$m$^2$ or less. Therefore, the antiglare surfaces of Examples 1 to 8 differed from the antiglare surfaces of Examples 9 and 10 in that the glare index value Sp was 4.0% or less and the anti-glare index value D was 0.10 or more.

Although the glass plate and the method of producing the glass plate according to the present disclosure have been described above, the present disclosure is not limited to the above embodiments. Various changes, modifications, substitutions, additions, deletions, and combinations thereof are possible within the scope of the claims. They also naturally fall within the technical scope of the present disclosure.

This application is based on and claims priority to Japanese Patent Application No. 2022-075351 filed in the Japan Patent Office on April 28, 2022, and the entire contents of Japanese Patent Application No. 2022-075351 are hereby incorporated by reference.

REFERENCE SIGNS LIST

1      Glass plate
11     First principal surface
111    Curvingly-recessed surface
12     Second principal surface

## Claims

1. A glass plate, comprising:

   a first principal surface; and
   a second principal surface facing away from the first principal surface, wherein
   the first principal surface includes an anti-glare surface, and
   the anti-glare surface includes a plurality of curvingly-recessed surfaces each of which has a spoon-cut shape, upon performing measurement of a surface shape of the anti-glare surface by a laser microscope and decomposition of the anti-glare surface into the plurality of curvingly-recessed surfaces by a watershed algorithm based on a result of the measurement, the anti-glare surface has
   a standard deviation $S_{\sigma}$ of an area S of the curvingly-recessed surface in plan view of 32.5 $\mu$m$^2$ or less,
   a number N of the curvingly-recessed surfaces per a predetermined area in plan view of 250 surfaces/100 $\mu$m$\square$ or more,
   an average value $H_{AVE}$ of a depth H of the curvingly-recessed surface of 0.10 $\mu$m or more,
   a standard deviation $H_{\sigma}$ of the depth H, of 0.220 $\mu$m or less, and
   a product $H_{AVE} \times H_{\sigma}$ of the average value $H_{AVE}$ of the depth H and the standard deviation $H_{\sigma}$, of 0.085 $\mu$m$^2$ or less.

2. The glass plate according to claim 1, wherein
   an average value $S_{AVE}$ of the area S of the anti-glare surface is 6 $\mu$m$^2$ or more and 33 $\mu$m$^2$ or less.

3. The glass plate according to claim 1 or 2, wherein

   the anti-glare surface has a glare index value Sp of 4.6% or less and an anti-glare index value D of 0.10 or more,

the glare index value Sp being determined through a process including:

> installing a pixel pattern provided with an SMS-1000 provided by D&MS as a photomask, on a light emitting surface of a backlight with a pattern surface facing upward,
> installing the glass plate on the pattern surface of the photomask, with the first principal surface facing upward,
> imaging a 190 dpi area of the pattern surface of the photomask through the glass plate by a camera of the SMS-1000, the SMS-1000 being a measurement device manufactured by DM&S, by installing the photomask on the light emitting surface of the backlight having a green light emission color, in a state simulating a green monochromatic image display composed of RGB (0,255,0), and
> determining a sparkle value that is the Sp by an image analysis by the measurement device, wherein a distance between a light shielding plate attached to the camera and the glass plate is 262 mm, and
> for a lens of a camera, a 23FM50SP lens having a focal distance of 50 mm at an aperture of 5.6 is used, and

the anti-glare index value D being determined through a process including:

> measuring a luminance of a reflected light by using the measurement device arranged so as to face the first principal surface of the glass plate, the glass plate being irradiated with light at an incident angle of 5.7° from a white light source of a cold cathode tube arranged in a rectangular slit having a length of 101 mm and a width of 1 mm, and
> using a C1614A lens having a focal distance of 16 mm at an aperture of 5.6 for the lens of the camera of the measurement device, and a distance from the first principal surface of the glass plate to the lens of the camera, of 300 mm,
> setting an imaging scale within a range of 0.0276 to 0.0278, and
> determining D by using an equation "D = (D2 + D3)/(2 × D1)", in which D1 is an average value of the luminance of the reflected light,

> wherein a difference ($\Delta\theta = \theta r - \theta i$) between a reflection angle $\theta r$ and an incidence angle $\theta i$ falls within a range of 0.0° ± 0.1°; D2 is an average value of the luminance of the reflected light,
> wherein the difference $\Delta\theta$ falls within a range of 0.5° ± 0.1°; and D3 is an average value of the luminance of the reflected light, wherein the difference $\Delta\theta$ falls within a range of -0.5° ± 0.1°.

4. A method of producing a glass plate including a first principal surface and a second principal surface facing away from the first principal surface, the first principal surface including an anti-glare surface, the anti-glare surface including a plurality of curvingly-recessed surfaces, and each of the curvingly-recessed surfaces having a spoon-cut shape, the method comprising:

> performing wet blasting at least on a portion of the first principal surface, by using a slurry containing particles that have an average value $d_{AVE}$ of a particle diameter d of 2.00 $\mu$m or more and a coefficient of variation $d_{CV}$ (coefficient of variation = standard deviation/average value) of the particle diameter d of 0.400 or less, and
> after the wet blasting, performing wet etching at least on a portion of the first principal surface by using an etchant containing an acid or an alkali.

5. The method of producing the glass plate according to claim 4, wherein
the average value $d_{AVE}$ of the particle diameter d of the particles is 2.00 $\mu$m or more and 4.50 $\mu$m or less.

6. A method of producing the glass plate according to claim 4 or 5, wherein
a Mohs hardness of the particles is higher than a Mohs hardness of the glass plate.

7. A glass plate, comprising:

> a first principal surface; and
> a second principal surface facing away from the first principal surface, wherein
> the first principal surface includes an anti-glare surface, and
> the anti-glare surface includes a plurality of curvingly-recessed surfaces each of which having a spoon-cut shape, upon performing measurement of a surface shape of the anti-glare surface by a laser microscope and decomposition of the anti-glare surface into the plurality of curvingly-recessed surfaces by a watershed algorithm based on a result of the measurement, the anti-glare surface has

a standard deviation $S_\sigma$ of an area S of the curvingly-recessed surface in plan view of 14.5 $\mu m^2$ or less,

a number N of the curvingly-recessed surfaces per a predetermined area in plan view of 450 surfaces/100 $\mu m\square$ or more,

an average value $H_{AVE}$ of a depth H of the curvingly-recessed surface of 0.10 $\mu m$ or more,

a standard deviation $H_\sigma$ of the depth H, of 0.180 $\mu m$ or less, and

a product $H_{AVE} \times H_\sigma$ of the average value $H_{AVE}$ of the depth H and the standard deviation $H_\beta$, of 0.070 $\mu m^2$ or less.

8. The glass plate according to claim 7, wherein
an average value $S_{AVE}$ of the area S of the anti-glare surface is 6 $\mu m^2$ or more and 17 $\mu m^2$ or less.

9. The glass plate according to claim 7 or 8, wherein

the anti-glare surface has a glare index value Sp of 4.0% or less and an anti-glare index value D of 0.10 or more, the glare index value Sp being determined through a process including:

installing a pixel pattern provided with an SMS-1000 provided by D&MS as a photomask, on a light emitting surface of a backlight with a pattern surface facing upward,
installing the glass plate on the pattern surface of the photomask, with the first principal surface facing upward,
imaging a 190 dpi area of the pattern surface of the photomask through the glass plate by a camera of the SMS-1000, the SMS-1000 being a measurement device manufactured by DM&S, by installing the photomask on the light emitting surface of the backlight having a green light emission color, in a state simulating a green monochromatic image display composed of RGB (0,255,0), and
determining a sparkle value that is the Sp by an image analysis by the measurement device, wherein
a distance between a light shielding plate attached to the camera and the glass plate is 262 mm, and
for a lens of a camera, a 23FM50SP lens having a focal distance of 50 mm at an aperture of 5.6 is used, and

the anti-glare index value D being determined through a process including:

measuring a luminance of a reflected light by using the measurement device arranged so as to face the first principal surface of the glass plate, the glass plate being irradiated with light at an incident angle of 5.7° from a white light source of a cold cathode tube arranged in a rectangular slit having a length of 101 mm and a width of 1 mm, and
using a C1614A lens having a focal distance of 16 mm at an aperture of 5.6 for the lens of the camera of the measurement device, and a distance from the first principal surface of the glass plate to the lens of the camera, of 300 mm,
setting an imaging scale within a range of 0.0276 to 0.0278, and
determining D by using an equation "D = (D2 + D3)/(2 $\times$ D1)", in which D1 is an average value of the luminance of the reflected light,

wherein a difference ($\Delta\theta = \theta r - \theta i$) between a reflection angle $\theta r$ and an incidence angle $\theta i$ falls within a range of 0.0° $\pm$ 0.1°; D2 is an average value of the luminance of the reflected light,
wherein the difference $\Delta\theta$ falls within a range of 0.5° $\pm$ 0.1°; and D3 is an average value of the luminance of the reflected light, wherein the difference $\Delta\theta$ falls within a range of -0.5° $\pm$ 0.1°.

10. A method of producing a glass plate including a first principal surface and a second principal surface facing away from the first principal surface, the first principal surface including an anti-glare surface, the anti-glare surface including a plurality of curvingly-recessed surfaces, and each of the curvingly-recessed surfaces having a spoon-cut shape, the method comprising:

performing wet blasting at least on a portion of the first principal surface, by using a slurry containing particles that have an average value $d_{AVE}$ of a particle diameter d of 2.00 $\mu m$ or more and a coefficient of variation $d_{CV}$ (coefficient of variation = standard deviation/average value) of the particle diameter d of 0.250 or less, and
after the wet blasting, performing wet etching at least on a portion of the first principal surface by using an etchant containing an acid or an alkali.

11. The method of producing the glass plate according to claim 10, wherein
the average value $d_{AVE}$ of the particle diameter d of the particles is 2.00 $\mu m$ or more and 4.50 $\mu m$ or less.

**12.** The method of producing the glass plate according to claim 10 or 11, wherein a Mohs hardness of the particles is higher than a Mohs hardness of the glass plate.

# FIG.1

(A)

(B)

# FIG.2

# FIG.3

```
         ┌─────────────┐
         │    START    │
         └─────────────┘
                │
                ▼                    S101
    ┌───────────────────────────┐
    │       WET BLASTING        │
    └───────────────────────────┘
                │
                ▼                    S102
    ┌───────────────────────────┐
    │       WET ETCHING         │
    └───────────────────────────┘
                │
                ▼
         ┌─────────────┐
         │     END     │
         └─────────────┘
```

# FIG.4

# FIG.5

# FIG.6

(A) EXAMPLE 1

(B) EXAMPLE 2

(C) EXAMPLE 3

(D) EXAMPLE 4

# FIG.7

(A) EXAMPLE 5

(B) EXAMPLE 6

(C) EXAMPLE 7

(D) EXAMPLE 8

# FIG.8

(A) EXAMPLE 9

(B) EXAMPLE 10

(C) EXAMPLE 11

# FIG.9

(A) EXAMPLE 12

(B) EXAMPLE 13

## INTERNATIONAL SEARCH REPORT

| | International application No. |
|---|---|
| | **PCT/JP2023/015636** |

| | |
|---|---|
| **A.** | **CLASSIFICATION OF SUBJECT MATTER** |

*C03C 19/00*(2006.01)i; *C03C 15/00*(2006.01)i
FI:   C03C19/00 A; C03C15/00 Z

According to International Patent Classification (IPC) or to both national classification and IPC

| | |
|---|---|
| **B.** | **FIELDS SEARCHED** |

Minimum documentation searched (classification system followed by classification symbols)

C03C19/00; C03C15/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 2016-040211 A (MUSASHINO FINE GLASS CO., LTD.) 24 March 2016 (2016-03-24)<br>entire text, all drawings | 1-12 |
| A | JP 2019-123652 A (AGC INC.) 25 July 2019 (2019-07-25)<br>entire text, all drawings | 1-12 |
| A | WO 2018/235808 A1 (AGC INC.) 27 December 2018 (2018-12-27)<br>entire text, all drawings | 1-12 |
| A | JP 2015-511918 A (CORNING INC.) 23 April 2015 (2015-04-23)<br>entire text, all drawings | 1-12 |
| A | WO 2020/067134 A1 (NIPPON ELECTRIC GLASS CO., LTD.) 02 April 2020 (2020-04-02)<br>entire text, all drawings | 1-12 |
| A | JP 2019-128600 A (NIPPON ELECTRIC GLASS CO., LTD.) 01 August 2019 (2019-08-01)<br>entire text, all drawings | 1-12 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 July 2023** | **25 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/015636**

| Patent document cited in search report | | | Publication date (day/month/year) | Patent family member(s) | | | Publication date (day/month/year) |
|---|---|---|---|---|---|---|---|
| JP | 2016-040211 | A | 24 March 2016 | CN | 105366961 | A | |
| | | | | TW | 201615589 | A | |
| JP | 2019-123652 | A | 25 July 2019 | US | 2019/0235304 | A1 | |
| | | | | entire text, all drawings | | | |
| | | | | DE | 102019000367 | A1 | |
| | | | | CN | 110054418 | A | |
| WO | 2018/235808 | A1 | 27 December 2018 | US | 2020/0124908 | A1 | |
| | | | | entire text, all drawings | | | |
| | | | | CN | 110770186 | A | |
| | | | | TW | 201904907 | A | |
| JP | 2015-511918 | A | 23 April 2015 | WO | 2013/066850 | A2 | |
| | | | | entire text, all drawings | | | |
| | | | | US | 2013/0107370 | A1 | |
| | | | | US | 2015/0062713 | A1 | |
| | | | | TW | 201323365 | A | |
| | | | | KR | 10-2014-0094592 | A | |
| | | | | CN | 105263877 | A | |
| WO | 2020/067134 | A1 | 02 April 2020 | US | 2022/0043184 | A1 | |
| | | | | entire text, all drawings | | | |
| | | | | CN | 112639541 | A | |
| JP | 2019-128600 | A | 01 August 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021532056 A
- WO 2018235808 A
- WO 2018230079 A
- WO 2018074494 A
- JP 2022075351 A